# EUROPEAN PATENT APPLICATION

(11) **EP 4 772 960 A1**
(43) Date of publication of application: **08.07.2026**
(21) Application number: 24880235.7
(22) Date of filing: 10.10.2024
(51) Int. Cl.: G06F 1/16

(54) **ELECTRONIC DEVICE**

(30) Priority: 18.10.2023 KR 20230139871; 30.11.2023 KR 20230171495
(71) Applicant: Samsung Electronics Co., Ltd., Suwon-si, Gyeonggi-do 16677 (KR)
(72) Inventor: SONG, Yurim, Suwon-si Gyeonggi-do 16677 (KR); KWON, Chaeyeon, Suwon-si Gyeonggi-do 16677 (KR); KIM, Sanghoon, Suwon-si Gyeonggi-do 16677 (KR); SON, Youngik, Suwon-si Gyeonggi-do 16677 (KR); LEE, Hosoon, Suwon-si Gyeonggi-do 16677 (KR); CHOI, Hyunsuk, Suwon-si Gyeonggi-do 16677 (KR)
(74) Representative: Gulde & Partner
(86) International application number: PCT/KR2024/096307
(87) International publication number: WO 2025/084899

(57) **Abstract**

The present disclosure relates to an electronic device. An electronic device according to an embodiment of the present disclosure may include: a frame including two conductive portions spaced apart from each other; a non-conductive member including a protruding portion inserted between the two conductive portions; a support member spaced inward from the frame; a conductive block arranged between the support member and the frame and extending toward the frame from the support member; a first recess which is formed in the inner surface of a first conductive portion facing the support member, between the two conductive portions, and into which the conductive block is inserted; and a second recess which is formed in one surface of the support member, the one surface facing the first conductive portion, and into which the conductive block is inserted.

## Description

### [Technical Field]

The disclosure relates to an electronic device, and for example, to an electronic device including a frame supporting structure.

### [Background Art]

With the remarkable advancement of information and communication technology and semiconductor technology, the distribution and use of various electronic devices are rapidly increasing. In particular, recent electronic devices are being developed to be portable and capable of communication.

An electronic device may refer to a device that performs a specific function according to a mounted program, such as home appliances, electronic organizers, portable multimedia players, mobile communication terminals, tablet PCs, video/audio devices, desktop/laptop computers, or vehicle navigation systems. For example, such electronic devices may output stored information as sound or video.

As the integration density of electronic devices increases and ultra-high-speed, high-capacity wireless communication becomes common, recently, various functions may be mounted on a single electronic device such as a mobile communication terminal. For example, not only a communication function but also an entertainment function such as a game, a multimedia function such as music/video playback, a communication and security function such as mobile banking, and a schedule management or electronic wallet function are being integrated into a single electronic device. These electronic devices have been downsized to be conveniently carried by users.

### [Detailed Description of the Invention]

### [Technical Solution]

An electronic device according to an embodiment of the disclosure may include a frame including two conductive portions which are spaced apart from each other, a non-conductive member including a protruding portion inserted between the two conductive portions, a supporting member spaced inward from the frame, a conductive block disposed between the supporting member and the frame and extending from the supporting member toward the frame, a first recess formed on an inner surface of a first conductive portion of the two conductive portions which faces the supporting member, wherein the conductive block is inserted into the first recess, and a second recess formed on one surface of the supporting member which faces the first conductive portion, wherein the conductive block is inserted into the second recess.

An electronic device according to an embodiment of the disclosure may include a frame including two conductive portions which are spaced apart from each other, a non-conductive member including a protruding portion inserted between the two conductive portions, a supporting member spaced inward from the two conductive portions, a conductive block protruding from one of the supporting member and the conductive portion and extending toward the other, and a recess formed in the other of the supporting member and the conductive portion, wherein the conductive block is inserted into the recess.

### [Brief Description of Drawings]

FIG. 1 is a block diagram illustrating an electronic device in a network environment according to an embodiment.
FIG. 2 is a perspective view illustrating a front surface of an electronic device according to an embodiment of the disclosure.
FIG. 3 is an exploded perspective view illustrating a front side of an electronic device according to an embodiment of the disclosure.
FIG. 4 illustrates an interior of a portion of an electronic device according to an embodiment of the disclosure.
FIG. 5 is an enlarged view illustrating a portion of FIG. 4.
FIG. 6A is a perspective view illustrating a state in which a conductive block is separated from a recess with a non-conductive member removed according to an embodiment of the disclosure.
FIG. 6B is an enlarged view illustrating a portion of FIG. 6A.
FIG. 7 is a view illustrating a state in which a conductive block is received in a recess with a non-conductive member removed according to an embodiment of the disclosure.
FIG. 8 is a view illustrating a state in which a conductive block is received in a recess with a non-conductive member removed according to an embodiment of the disclosure.
FIG. 9 is a view illustrating views illustrating a conductive block from various directions according to an embodiment of the disclosure.
FIG. 10 is a view illustrating views illustrating a conductive block from various directions according to an embodiment of the disclosure.
FIG. 11 is a view illustrating a state in which a conductive block is received in a recess with a non-conductive member removed according to an embodiment of the disclosure.
FIG. 12 is a view illustrating views illustrating a conductive block from various directions according to an embodiment of the disclosure.
FIG. 13 is a view illustrating a state in which a conductive block is received in a recess with a non-conductive member removed according to an embodiment of the disclosure.
FIG. 14 is a view illustrating a state in which a conductive block is separated from a recess with a non-conductive member removed according to an embodiment of the disclosure.
FIG. 15 is a view illustrating a state in which a conductive block is received in a recess with a non-conductive member removed according to an embodiment of the disclosure.
FIG. 16 is a view illustrating a state in which a conductive block is separated from a recess with a non-conductive member removed according to an embodiment of the disclosure.
FIG. 17 is a view illustrating a state in which a conductive block is received in a recess with a non-conductive member removed according to an embodiment of the disclosure.

### [Mode for Carrying out the Invention]

The following description of the accompanying drawings may provide an understanding of various exemplary implementations of the disclosure including the claims and their corresponding contents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and conciseness.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

It should be understood that the singular forms "a", "an", and "the" include plural meanings unless the context clearly indicates otherwise. Thus, as an example, "a component surface" may be interpreted as including one or more of the surfaces of a component.

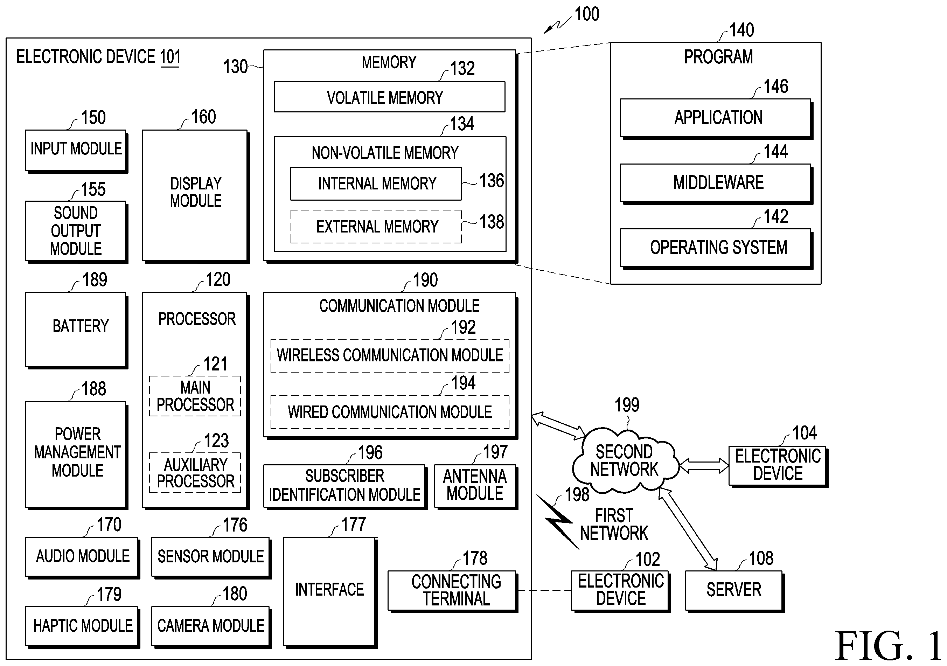

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

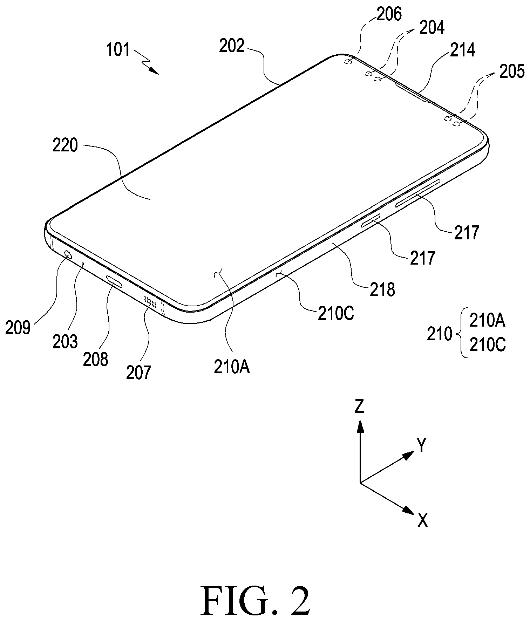

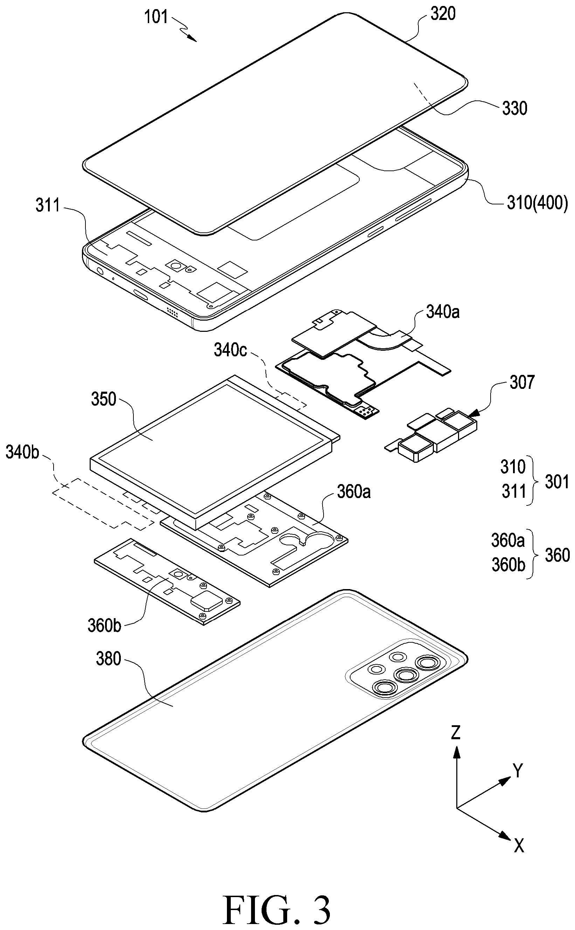

FIG. 2 is a front perspective view illustrating an electronic device 101 (e.g., the electronic device 101 of FIG. 1) according to an embodiment of the disclosure. The embodiment of FIG. 2 may be combined with the embodiment of FIG. 1 or the embodiments of FIGS. 3 to 13.

Referring to FIG. 2, an electronic device 101 (e.g., the electronic device 101 of FIG. 1) according to an embodiment may include a housing 210 including a first surface (or front surface) 210A, a second surface (or rear surface) opposite to the first surface 210A, and a lateral surface 210C surrounding a space between the first surface 210A and the second surface. According to an embodiment, the first surface 210A may be formed, at least in part, by a substantially transparent front plate 202 (e.g., a glass plate including various coating layers, or a polymer plate). The lateral surface 210C may be formed by a side structure 218 including metal and/or polymer which is coupled to the front plate 202 and a rear plate 211.

Although not illustrated, the front plate 202 according to an embodiment of the disclosure may include region(s) that are bent toward the rear plate 211 at least at a portion of an edge and seamlessly extended. In an embodiment, only one of the areas of the front plate 202 (or the rear plate 211), which bend to the rear plate 211 (or front plate 202) and extend may be included in one edge of the first surface 210A. According to an embodiment, the front plate 202 or the rear plate 211 may have a substantially flat plate shape.

According to an embodiment, the electronic device 101 may include at least one of a display 220, an audio module 203, 207, 214, a sensor module 204, a camera module 205, a key input device 217, a light emitting element 206, and a connector hole 208, 209. In an embodiment, the electronic device 101 may exclude at least one (e.g., the key input device 217 or the light emitting device 206) of the components or may add other components.

The display 220 may be visually exposed through a substantial portion of the front plate 202, for example. In an embodiment, at least a portion of the display 220 may be visually exposed through the front plate 202 forming the first surface 210A or through a portion of the side surface 210C. In an embodiment, an edge of the display 220 may be formed to be generally the same as an adjacent outer shape of the front plate 202. In an embodiment (not illustrated), the interval between the outer edge of the display 220 and the outer edge of the front plate 202 may remain substantially even to give a larger area of visual exposure of the display 220.

In an embodiment (not shown), the screen display region of the display 220 may have a recess or opening in a portion thereof, and at least one or more of the audio module 214, sensor module 204, camera module 205, and light emitting device 206 may be aligned with the recess or opening. In an embodiment (not shown), at least one or more of the audio module 214, sensor module 204, camera module 205, fingerprint sensor (not shown), and light emitting device 206 may be included on the rear surface of the screen display area of the display 220. In an embodiment (not illustrated), the display 220 may be disposed to be coupled with, or adjacent, a touch detecting circuit, a pressure sensor capable of measuring the strength (pressure) of touches, and/or a digitizer for detecting a magnetic field-type stylus pen.

According to an embodiment of the disclosure, the audio module 203, 207, 214 may include a microphone hole 203 and a speaker hole 207, 214. A microphone for acquiring external sounds may be disposed in the microphone hole 203. In an embodiment, a plurality of microphones may be disposed to detect the direction of the sound. The speaker holes 207 and 214 may include an external speaker hole 207 and a phone receiver hole 214. In an embodiment, the speaker holes 207 and 214 and the microphone hole 203 may be implemented as a single hole, or speakers may be rested without the speaker holes 207 and 214 (e.g., piezo speakers).

According to an embodiment of the disclosure, the sensor module 204 may generate an electrical signal or data value corresponding to an internal operation state of the electronic device 101 or an external environmental state. The sensor module 204 may include, e.g., a first sensor module 204 (e.g., a proximity sensor) and/or a second sensor module (not illustrated) (e.g., a fingerprint sensor) disposed on the front surface 210A of the housing 210. The fingerprint sensor may be disposed on the second surface 210B or side surface 210C as well as the first surface 210A (e.g., the display 220) of the housing 210. The electronic device 101 may further include, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment of the disclosure, the camera module 205 may be disposed on the first surface 210A of the electronic device 101. The camera device 205 may include one or more lenses, an image sensor, and/or an image signal processor.

According to an embodiment of the disclosure, the key input device 217 may be disposed on the lateral surface 210C of the housing 210. In an embodiment, the electronic device 101 may not include some or all of the above-mentioned key input device 217, and the key input device 217 not included may be implemented in another form such as a soft key on the display 220. In an embodiment, the key input device may include the sensor module disposed on the second surface 210B of the housing 210.

The light emitting device 206 may be disposed on, e.g., the first surface 210A of the housing 210. The light emitting device 206 may provide, e.g., information about the state of the electronic device 101 in the form of light. In an embodiment, the light emitting device 206 may provide a light source that interacts with, e.g., the camera module 205. The light emitting device 206 may include, e.g., a light emitting diode (LED), an infrared (IR) LED, or a xenon lamp.

According to an embodiment of the disclosure, the connector hole 208, 209 may include a first connector hole 208 capable of receiving a connector (e.g., a USB connector) for transmitting/receiving power and/or data with an external electronic device, and/or a second connector hole (e.g., an earphone jack) 209 capable of receiving a connector for transmitting/receiving an audio signal with an external electronic device.

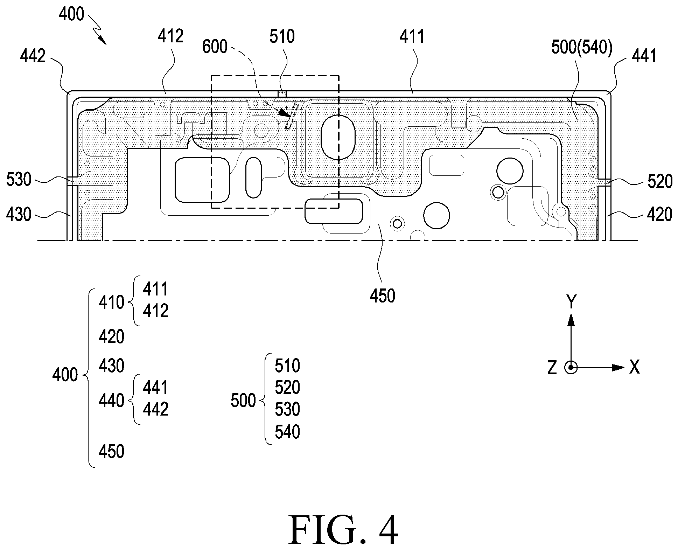

FIG. 3 is an exploded perspective view illustrating a front side of an electronic device according to an embodiment of the disclosure. The embodiment of FIG. 3 may be combined with the embodiments of FIGS. 1 to 2, or with the embodiments of FIGS. 4 to 13.

Referring to FIG. 3, the electronic device 101 (e.g., the electronic device 101 of FIG. 1 or FIG. 2) may include a side structure 310, a first supporting member 311 (e.g., a bracket), a front plate 320 (e.g., the front plate 202 of FIG. 2), a display 330 (e.g., the display 220 of FIG. 2), at least one printed circuit board (or board assembly) 340a, 340b, a battery 350, a second supporting member 360 (e.g., a rear case), an antenna, a camera assembly 307, and a rear plate 380 (e.g., the rear plate 211 of FIG. 2). When the plurality of printed circuit boards 340a and 340b are included, the electronic device 101 may include at least one flexible printed circuit board 340c to electrically connect different printed circuit boards. For example, the printed circuit boards 340a and 340b may include a first circuit board 340a disposed above the battery 350 and a second circuit board 340b disposed under the battery 350, and the flexible circuit board 340c may electrically connect the first circuit board 340a and the second circuit board 340b.

According to an embodiment, the electronic device 101 may exclude at least one (e.g., the first supporting member 311 or the second supporting member 360) of the components or may add other components. At least one of the components of the electronic device 101 may be the same or similar to at least one of the components of the electronic device 101 of FIG. 1 or 2 and no duplicate description is made below.

At least a portion of the first supporting member 311 may be provided in a flat plate shape. In an embodiment, the first supporting member 311 may be disposed inside the electronic device 101 to be connected with the side structure 310 or integrated with the side structure 310. The first supporting member 311 may be formed of, e.g., a metallic material and/or non-metallic material (e.g., polymer). When the first supporting member 311 is at least partially formed of a metallic material, a portion of the side structure 310 or the first supporting member 311 may function as an antenna. The display 330 may be joined onto one surface of the first supporting member 311, and the printed circuit boards 340a and 340b may be joined onto the opposite surface of the first supporting member 311. A processor, memory, and/or interface may be mounted on the printed circuit boards 340a and 340b. The processor may include one or more of, e.g., a central processing unit, an application processor, a graphic processing device, an image signal processor, a sensor hub processor, or a communication processor.

In an embodiment, the front plate 320 may be coupled to the supporting member 311 through an adhesive member. The front cover may be referred to as a "cover" or "front cover." The rear plate 380 may be referred to as a "cover" or "rear cover." The cover 380 may face the supporting member 311.

According to an embodiment, the first supporting member 311 and the side structure 310 may be collectively referred to as a front case or a housing 301. According to an embodiment, the housing 301 may be generally understood as a structure for receiving, protecting, or disposing the printed circuit boards 340a and 340b or the battery 350.

In an embodiment, the housing 301 may be understood as including a structure that the user may visually or tactfully recognize from the outside of the electronic device 101, e.g., the side structure 310, the front plate 320, and/or the rear plate 380. The housing 301 may include a side structure 310, a first supporting member 311, a front plate 320, and a rear plate 380. In an embodiment, the 'front or rear surface of the housing 301' may refer to the first surface 210A of FIG. 2 or the second surface 210B of FIG. 2. In an embodiment, the first supporting member 311 may be disposed between the front plate 320 (e.g., the first surface 210A of FIG. 2) and the rear plate 380 (e.g., the second surface 210B of FIG. 2) and may function as a structure for placing an electrical/electronic component, such as the printed circuit boards 340a and 340b or the camera assembly 307.

In an embodiment, the memory may include, e.g., a volatile memory or a non-volatile memory.

The interface may include, e.g., a high definition multimedia interface (HDMI), a universal serial bus (USB) interface, a secure digital (SD) card interface, and/or an audio interface. The interface may, e.g., electrically or physically connect the electronic device 101 to an external electronic device, and may include a USB connector, an SD card/MMC connector, or an audio connector.

The second supporting member 360 may include, e.g., an upper supporting member 360a and a lower supporting member 360b. In an embodiment, the upper supporting member 360a, together with a portion of the first supporting member 311, may be disposed to surround the printed circuit boards 340a and 340b (e.g., the first circuit board 340a). For example, the upper supporting member 360a of the second supporting member 360 may be disposed to face the first supporting member 311 with the first circuit board 340a interposed therebetween.

In an embodiment, the lower supporting member 360b of the second supporting member 360 may be disposed to face the first supporting member 311 with the second circuit board 340b interposed therebetween. A circuit device (e.g., a processor, a communication module, or memory) implemented in the form of an integrated circuit chip or various electrical/electronic components may be disposed on the printed circuit boards 340a and 340b. According to an embodiment, the printed circuit boards 340a and 340b may receive an electromagnetic shielding environment from the second supporting member 360. In an embodiment, the lower supporting member 360b may be utilized as a structure in which electrical/electronic components, such as a speaker module and an interface (e.g., a USB connector, an SD card/MMC connector, or an audio connector) may be disposed.

In an embodiment, electrical/electronic components, such as a speaker module and an interface (e.g., a USB connector, an SD card/MMC connector, or an audio connector) may be disposed on an additional printed circuit board (not shown). For example, the lower supporting member 360b, together with the other part of the first supporting member 311, may be disposed to surround the additional printed circuit board. The speaker module or interface disposed on the additional printed circuit board (not shown) or the lower supporting member 360b may be disposed corresponding to the audio module 207 or connector holes 208 and 309 of FIG. 2.

The battery 350 may be a device for supplying power to at least one component of the electronic device 101. The battery 350 may include, e.g., a primary cell which is not rechargeable, a secondary cell which is rechargeable, or a fuel cell. At least a portion of the battery 350 may be disposed on substantially the same plane as the printed circuit boards 340a and 340b. The battery 350 may be integrally disposed inside the electronic device 101 or may be detachably disposed with the electronic device 101.

Although not shown, the antenna may include a conductor pattern implemented on the surface of the second supporting member 360 through, e.g., laser direct structuring. In an embodiment, the antenna may include a printed circuit pattern formed on the surface of the thin film. The thin film-type antenna may be disposed between the rear plate 380 and the battery 350. The antenna may include, e.g., a near-field communication (NFC) antenna, a wireless charging antenna, and/or a magnetic secure transmission (MST) antenna. The antenna may perform short-range communication with, e.g., an external device or may wirelessly transmit or receive power necessary for charging. In an embodiment of the present invention, another antenna structure may be formed by a portion or combination of the side structure 310 and/or the first supporting member 311.

FIG. 4 illustrates an interior of a portion of an electronic device (e.g., the electronic device 101 of FIG. 3) according to an embodiment of the disclosure. Referring to FIG. 4, the electronic device 101 according to an embodiment of the disclosure may include a body 400. The body 400 may include a frame 410, 420, 430 and a supporting member 450 spaced inward from the frame 410, 420, 430. The supporting member 450 may be referred to as a support bracket.

According to an embodiment of the disclosure, the body 400 may include frames 410, 420, 430 which are spaced apart from each other. The frames 410, 420, 430 may be sequentially disposed to form an outer periphery of the electronic device 101 (e.g., the lateral surface 210C of FIG. 2 and/or the side structure 310 of FIG. 3). As an example, the frames 410, 420, 430 may extend long along a periphery of the electronic device 101. As another example, the frames 410, 420, 430 may be locally disposed in a region of an exterior of the electronic device 101 or disposed inside a casing (not illustrated) forming the exterior of the electronic device 101.

According to an embodiment of the disclosure, the frames 410, 420, 430 may be exposed to an outside of the electronic device 101. Alternatively, the frames 410, 420, 430 may be covered by a non-conductive cover (not illustrated). As an example, the frames 410, 420, 430 may form an outer lateral surface of the electronic device 101. The frames 410, 420, 430 may be referred to as an outer frame.

According to an embodiment of the disclosure, the frames 410, 420, 430 may include a first frame 410, and a second frame 420 and a third frame 430 extending to intersect with the first frame 410. The first frame 410 and the second frame 420 may intersect with each other at a first edge 441. The first frame 410 and the third frame 430 may intersect with each other at a second edge 442. As an example, the second frame 420 and the third frame 430 may be perpendicular to the first frame 430.

According to an embodiment of the disclosure, the frame 410, 420, 430 may include at least one conductive portion. As an example, FIG. 4 illustrates a case in which the first frame 410 includes a plurality of conductive portions 411, 412. The second frame 420 and the third frame 430 may also include a plurality of conductive portions like the first frame 410. Hereinafter, the disclosure is described mainly with reference to the first frame 410 and the conductive portions 411, 412 of the first frame 410 for convenience of description.

According to an embodiment of the disclosure, the frames 410, 420, 430 may be disposed around internal components (e.g., the battery 350 of FIG. 3) of the electronic device 101. The internal components may be partially surrounded by the frames 410, 420, 430. The frames 410, 420, 430 may protect the internal components from external impact or foreign objects.

According to an embodiment of the disclosure, the first frame 410 may include a first conductive portion 411 and a second conductive portion 412 which are spaced apart from each other. The protruding portion 510 of the non-conductive member 500 may be disposed between the first conductive portion 411 and the second conductive portion 412. The relationship between the conductive portions 411, 412 and the protruding portion 510 is described below in detail.

The electronic device 101 according to an embodiment of the disclosure may include at least one antenna module (e.g., the antenna module 197 of FIG. 1). The antenna module 197 may be supported by the supporting member 450. The antenna module 197 may be electrically connected to the conductive portions of the frames 410, 420, 430. As an example, the antenna module 197 may be electrically connected to the conductive portions 411, 412 of the first frame 410. The conductive portions 411, 412 may function as an antenna element for transmitting radio waves to the outside.

According to an embodiment of the disclosure, the body 400 may include the supporting member 450 spaced inward (e.g., toward a center) from the frames 410, 420, 430 of the electronic device 101. The internal components of the electronic device 101 may be supported by the supporting member 450. The supporting member 450 may be at least partially conductive. The supporting member 450 may be referred to as an inner frame.

According to an embodiment of the disclosure, the supporting member 450 may be directly coupled to the frames 410, 420, 430 or integrally formed with the frames 410, 420, 430. Alternatively, a predetermined member may be interposed between the supporting member 450 and the frames 410, 420, 430 to connect them to each other. The supporting member 450 may be conductive. As an example, FIG. 4 illustrates a state in which the first conductive portion 411 of the first frame 410 and the supporting member 450 are connected by the conductive block 600.

According to an embodiment of the disclosure, the non-conductive member 500 may be disposed inside the electronic device 101. The non-conductive member 500 may include a first portion 540 disposed between the frames 410, 420, 430 and the supporting member 450 and at least one second portion 510, 520, 530. As an example, the non-conductive member 500 may be a resin material.

According to an embodiment of the disclosure, a thermal expansion coefficient of the non-conductive member 500 and a thermal expansion coefficient of the conductive portions 411, 412 of the first frame 410 may be different from each other. Based on the same shape, the thermal expansion amount of the non-conductive member 500 may be smaller than thermal expansion amount of the conductive portions 411, 412 of the first frame 410.

According to an embodiment of the disclosure, the first portion 540 may be disposed between the frames 410, 420, 430 and the supporting member 450. The first portion 540 may maintain a separation distance between the frames 410, 420, 430 and the supporting member 450. The first portion 540 may block the frames 410, 420, 430 from being depressed toward an inside of the electronic device 101 due to external impact. Alternatively, the first portion 540 may block electrical connection between the frames 410, 420, 430 and the supporting member 450 in some regions. The first portion 540 may be referred to as a buffer portion.

According to an embodiment of the disclosure, the second portions 510, 520, 530 may be disposed between the frames 410, 420, 430. The second portions 510, 520, 530 may be inserted between the frames 410, 420, 430. The second portions 510, 520, 530 may be sandwiched between the frames 410, 420, 430. The second portions 510, 520, 530 may be disposed in at least one of between the conductive portions 411, 412 of the first frame 410, between the first frame 410 and the second frame 420, and between the first frame 410 and the third frame 430.

According to an embodiment of the disclosure, the second portions 510, 520, 530 may be disposed between the frames 410, 420, 430 and/or between the conductive portions 411, 412. The second portions 510, 520, 530 may block electrical connection between the frames 410, 420, 430 and/or between the conductive portions 411, 412. The second portions 510, 520, 530 may be referred to as a protruding portion 510, 520, 530.

According to an embodiment of the disclosure, the protruding portions 510, 520, 530 may be exposed to an outside of the electronic device 101. As an example, the protruding portions 510, 520, 530 may form an outer lateral surface of the electronic device 101.

According to an embodiment of the disclosure, the electronic device 101 may include a conductive block 600 disposed between the frames 410, 420, 430 and the supporting member 450. As an example, FIG. 4 illustrates a case in which the conductive block 600 is disposed between the first frame 410 and the supporting member 450. Hereinafter, the conductive block 600 is described in relation to the first frame 410 for convenience of description, and this may equally apply to the second frame 420 and the third frame 430.

According to an embodiment of the disclosure, the conductive block 600 may be located adjacent to the protruding portion 510. The conductive block 600 may contact the first conductive portion 411 and the supporting member 450. The conductive block 600 may be supported by the supporting member 450. The conductive block 600 may extend along a direction from an inside toward an outside of the electronic device 101 (e.g., an X-axis direction, a Y-axis direction). The conductive block 600 may extend from the supporting member 450 toward the first conductive portion 411 of the first frame 410. The conductive block 600 may minimize the first conductive portion 411 from being depressed toward an inside of the electronic device 101 due to external impact or the like.

According to an embodiment of the disclosure, the conductive block 600 may be covered by the non-conductive member 500. As an example, after the conductive block 600 is coupled to the first frame 410 and the supporting member 450, the non-conductive member 500 may be injected to cover the conductive block 600. When the injected non-conductive member 500 is cured, coupling between the conductive block 600 and the first frame 410 and/or coupling between the conductive block 600 and the supporting member 450 may become firm.

According to an embodiment of the disclosure, the conductive block 600 may be separately coupled to the first frame 410 and the supporting member 450. Alternatively, the conductive block 600 may be integrally formed with the first frame 410 or the supporting member 450. The conductive block 600 may be a portion of the first conductive portion 411 of the first frame 410 or a portion of the supporting member 450.

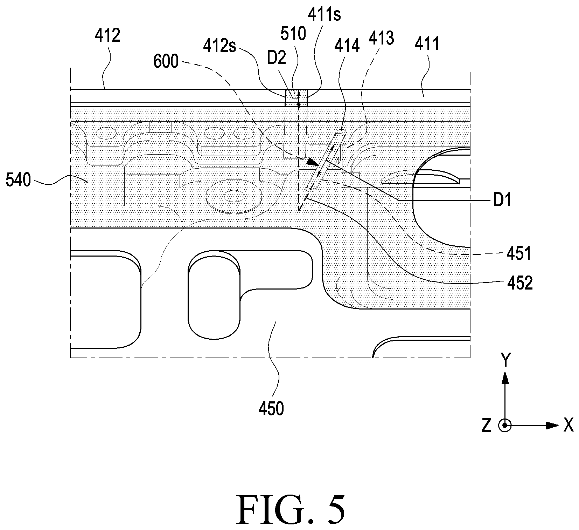

FIG. 5 is an enlarged view illustrating a portion of FIG. 4. Referring to FIGS. 4 and 5, the electronic device 101 according to an embodiment of the disclosure may include a bridge structure 413, 451 connecting the first frame 410 and the supporting member 450.

According to an embodiment of the disclosure, the bridge structure 413, 451 may include a first bridge 413 formed on the first conductive portion 411 of the first frame 410 and a second bridge 451 formed on the supporting member 450.

According to an embodiment of the disclosure, the first bridge 413 may protrude from the first conductive portion 411 toward the supporting member 450. The first bridge 413 may protrude from an inner surface of the first conductive portion 411 which faces the supporting member 450. The second bridge 451 may protrude from the supporting member 450 toward the first conductive portion 411. The second bridge 451 may protrude from a region of the supporting member 450 which faces the first conductive portion 411. The first bridge 413 and the second bridge 451 may protrude toward each other.

According to an embodiment of the disclosure, the first bridge 413 may be located adjacent to the protruding portion 510. The first bridge 413 may be located closer to two opposite ends of the first conductive portion 411 than to a center of the first conductive portion 411. As an example, the first bridge 413 may be located at one end of the first conductive portion 411 coupled to the protruding portion 510 or may be spaced apart by a predetermined distance from the one end. The second bridge 451 may be spaced inward from the first bridge 413 toward an inside of the electronic device 101.

According to an embodiment of the disclosure, the first bridge 413 may include a first recess 414. The first recess 414 may be formed on an inner side of the first bridge 413 adjacent to the second bridge 451. The second bridge 451 may include a second recess 452. The second recess 452 may be formed on an outer side of the second bridge 451 adjacent to the first bridge 413. The first recess 414 and the second recess 452 may face each other.

According to an embodiment of the disclosure, one end of the conductive block 600 may be located inside the first recess 414. The one end of the conductive block 600 may contact an inner side of the first recess 414. The other end of the conductive block 600 may be located inside the second recess 452. The other end of the conductive block 600 may contact an inner side of the second recess 452. The conductive block 600 may be inserted into the first recess 414 and the second recess 452.

According to an embodiment of the disclosure, the one end of the conductive block 600 may be spaced apart from an inner side of the first recess 414. A clearance space may be formed between the one end of the conductive block 600 and the inner side of the first recess 414. A clearance space may be formed between the other end of the conductive block 600 and an inner side of the second recess 452.

According to an embodiment of the disclosure, the conductive block 600 may elongately extend from the one end inserted into the first recess 414 to the other end inserted into the second recess 452. The conductive block 600 may extend along a length direction D1 from the one end inserted into the first recess 414 to the other end inserted into the second recess 452. As an example, the conductive block 600 may extend straight.

According to an embodiment of the disclosure, the conductive portions 411, 412 of the first frame 410 may include opposing surfaces 411s, 412s. The opposing surfaces 411s, 412s of the two conductive portions 411, 412 may face each other. According to an embodiment of the disclosure, the protruding portion 510 of the non-conductive member 500 may be disposed between the two opposing surfaces 411s, 412s which face each other. The two opposing surfaces 411s, 412s which face each other may contact the protruding portion 510.

According to an embodiment of the disclosure, the opposing surfaces 411s, 412s may extend along a direction from an inside toward an outside of the electronic device 101 (e.g., a Y-axis direction). The opposing surfaces 411s, 412s may extend along a direction (e.g., an extension direction D2) in which an outer surface (e.g., the lateral surface 210C of FIG. 2) of the conductive portions 411, 412 faces.

According to an embodiment of the disclosure, the two opposing surfaces 411s, 412s which face each other may extend smoothly, but may be at least partially formed roughly unlike the disclosure. The shape of a surface of the opposing surfaces 411s, 412s may be understood as being unrelated to the concept of the disclosure.

According to an embodiment of the disclosure, the non-conductive member 500 and the frame 410 may contact each other. The non-conductive member 500 and the frame 410 may be coupled to each other. The non-conductive member 500 and the frame 410 may be attached to each other. As an example, by forming fine irregularities on a surface (e.g., the opposing surface 411s, 412s) of the frame 410 through surface treatment and then insert-molding the non-conductive member 500, the non-conductive member 500 may be attached to the surface of the frame 410 without intervention of an adhesive member.

According to an embodiment of the disclosure, the length direction D1 of the conductive block 600 may be inclined with respect to the extension direction D2 of the opposing surfaces 411s, 412s. The length direction D1 of the conductive block 600 may be inclined with respect to the extension direction D2 of the opposing surfaces 411s, 412s so as to be away from the protruding portion 510. The length direction D1 of the conductive block 600 may be inclined with respect to the extension direction D2 of the opposing surfaces 411s, 412s so as to be closer to the protruding portion 510, unlike illustrated in FIG. 5.

According to an embodiment of the disclosure, as temperature rises (e.g., 80 degrees Celsius) in a manufacturing process (e.g., drying) of the electronic device 101, the supporting member 450, the frame 410, the conductive block 600, and the non-conductive member 500 may extend. The supporting member 450, the frame 410, the conductive block 600, and the non-conductive member 500, which are adjacent to each other, may push against each other when extended by heat.

Unlike the disclosure, in a case where the supporting member 450, the conductive block 600, and the frame 410 are all integrally formed (hereinafter, a first case), expansion amounts of the supporting member 450, the conductive block 600, and the frame 410 may be serially added, so that a relative position of the conductive portion 411 with respect to the protruding portion 510 may significantly change. Accordingly, the protruding portion 510 and the conductive portion 411 attached to each other may separate from each other.

However, in a case where the conductive block 600 is configured separately from the supporting member 450 and the frame 410 and is spaced apart from the first recess 414 and the second recess 452 to form a clearance space (hereinafter, a second case) as in the disclosure, a degree of change in the relative position of the conductive portion 411 with respect to the protruding portion 510 is decreased compared to the first case, so that the attachment between the protruding portion 510 and the conductive portion 411 may be maintained.

According to an embodiment of the disclosure, by inclining the length direction D1 of the conductive block 600 with respect to a direction normal to an outer surface (e.g., the lateral surface 210C of FIG. 2) of the conductive portion 411, the conductive portion 411 may be minimized from being depressed toward an inside of the electronic device 101 due to external impact or the like.

According to an embodiment of the disclosure, by inclining the length direction D1 of the conductive block 600 with respect to the extension direction D2 of the opposing surfaces 411s, 412s, the conductive portion 411 may be minimized from being depressed toward an inside of the electronic device 101 due to external impact or the like.

According to an embodiment of the disclosure, by inclining the length direction D1 of the conductive block 600 with respect to the extension direction D2 of the opposing surfaces 411s, 412s, separation between the protruding portion 510 and the conductive portion 411 attached to each other may be minimized. For example, since the elongately extended conductive block 600 has a thermal expansion amount in a direction intersecting with the length direction D1 (e.g., the extension direction D2 of the opposing surfaces 411s, 412s) smaller than a thermal expansion amount in the length direction D1, a relative displacement difference of the conductive portion 411 with respect to the protruding portion 510 may be minimized, so that coupling (attachment) between the protruding portion 510 and the conductive portion 411 may be maintained.

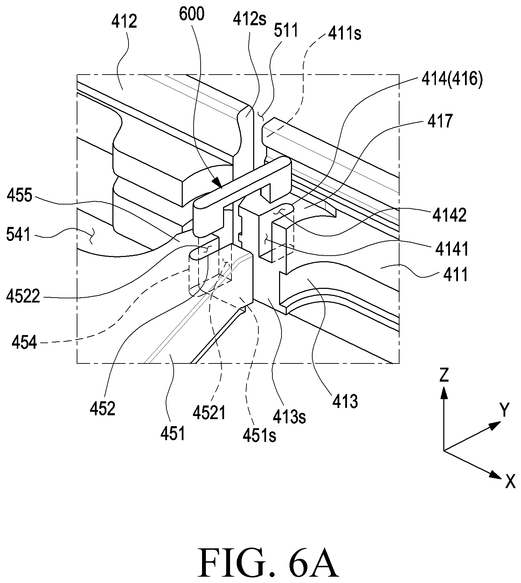

FIG. 6A illustrates a state in which the non-conductive member 500 is removed and the conductive block 600 is separated from the recesses 414, 452 according to an embodiment of the disclosure.

Referring to FIG. 6A, the electronic device (e.g., the electronic device 101 of FIGS. 2 and 3) according to an embodiment of the disclosure may include a first space 541 and a second space 511 in which the non-conductive member 500 is disposed. The second space 511 may be located around the first space 541.

According to an embodiment of the disclosure, the first portion 540 (e.g., the first portion 540 of FIG. 4) of the non-conductive member 500 may be disposed in the first space 541. The first space 541 may be a space between the frame 410 and the supporting member 450. The first portion 540 disposed in the first space 541 may support the frame 410 with respect to the supporting member 450.

According to an embodiment of the disclosure, the protruding portion 510 or the second portion 510 of the non-conductive member 500 may be disposed in the second space 511. The second space 511 may be a space between the two opposing surfaces 411s, 412s which face each other. The protruding portion 510 disposed in the second space 511 may be inserted between the two opposing surfaces 411s, 412s.

According to an embodiment of the disclosure, the first bridge 413 and the second bridge 451 may include opposing surfaces 413s, 451s which face each other. The two opposing surfaces 413s, 451s of the first bridge 413 and the second bridge 451 may be substantially parallel to each other.

According to an embodiment of the disclosure, the opposing surface 413s of the first bridge 413 may face an inside of the electronic device 101. The opposing surface 413s of the first bridge 413 may be referred to as an inner surface 413s of the first bridge 413. The opposing surface 451s of the second bridge 451 which faces the opposing surface 413s of the first bridge 413 may face an outside of the electronic device 101. The opposing surface 451s of the second bridge 451 may be referred to as an outer surface 451s of the second bridge 451.

According to an embodiment of the disclosure, the first bridge 413 may include a lateral surface 417 intersecting with the opposing surface 413s. The lateral surface 417 of the first bridge 413 may be a portion of a periphery of the first bridge 413 having a protruding shape.

According to an embodiment of the disclosure, the lateral surface 417 of the first bridge 413 may face a direction (e.g., a Z-axis direction) perpendicular to a direction (e.g., a Y-axis direction) in which an outer surface (e.g., the lateral surface 210C of FIG. 2) of the conductive portion 411 faces and to a direction (e.g., an X-axis direction) in which the opposing surface 411s of the conductive portion 411 faces.

According to an embodiment of the disclosure, the second bridge 451 may include a lateral surface 455 intersecting with the opposing surface 451s. The lateral surface 455 of the second bridge 451 may be a portion of a periphery of the second bridge 451 having a protruding shape.

According to an embodiment of the disclosure, the lateral surface 455 of the second bridge 451 may face a direction (e.g., a Z-axis direction) substantially identical to the lateral surface 417 of the first bridge 413. As an example, the lateral surface 417 of the first bridge 413 and the lateral surface 455 of the second bridge 451 may face a front or a rear of the electronic device (e.g., the electronic device 101 of FIG. 3). As an example, the front of the electronic device 101 may be a direction in which a display (e.g., the display 330 of FIG. 3) of the electronic device 101 faces. As an example, the rear of the electronic device 101 may be a direction in which a rear surface of a cover (e.g., the rear cover 380 of FIG. 3) of the electronic device 101 faces.

According to an embodiment of the disclosure, the first recess 414 may be recessed from the opposing surface 413s of the first bridge 413. The second recess 452 may be recessed from the opposing surface 451s of the second bridge 451. As an example, the direction in which the first recess 414 is recessed from the opposing surface 413s and the direction in which the second recess 452 is recessed from the opposing surface 451s may be substantially parallel to each other.

According to an embodiment of the disclosure, the first recess 414 may include a first opening 4141 formed in the opposing surface 413s of the first bridge 413. The second recess 452 may include a first opening 4521 formed in the opposing surface 451s of the second bridge 451. The first opening 4141 of the first recess 414 and the first opening 4521 of the second recess 452 may face each other. The first opening 4141 of the first recess 414 and the first opening 4521 of the second recess 452 may be spaced apart from each other in the length direction D1 of the conductive block 600.

According to an embodiment of the disclosure, the first recess 414 may be recessed from the lateral surface 417 of the first bridge 413. The second recess 452 may be recessed from the lateral surface 455 of the second bridge 451. As an example, the direction in which the first recess 414 is recessed from the lateral surface 417 and the direction in which the second recess 452 is recessed from the lateral surface 455 may be substantially identical to each other.

According to an embodiment of the disclosure, the first recess 414 may include a second opening 4142 formed in the lateral surface 417 of the first bridge 413. The second opening 4142 of the first recess 414 may communicate with the first opening 4141. The second opening 4142 may be connected to the first opening 4141 at an edge of the opposing surface 413s of the first bridge 413.

According to an embodiment of the disclosure, the second recess 452 may include a second opening 4522 formed in the lateral surface 455 of the second bridge 451. The second opening 4522 of the second recess 452 may communicate with the first opening 4521. The second opening 4522 may be connected to the first opening 4521 at an edge of the opposing surface 451s of the second bridge 451. The second opening 4522 of the second recess 452 may be spaced apart from the second opening 4142 of the first recess 414 in the length direction D1 of the conductive block 600.

According to an embodiment of the disclosure, one side of the conductive block 600 may be inserted into an inside of the first recess 414 through the second opening 4142 of the first recess 414. The other side of the conductive block 600 may be inserted into an inside of the second recess 452 through the second opening 4522 of the second recess 452.

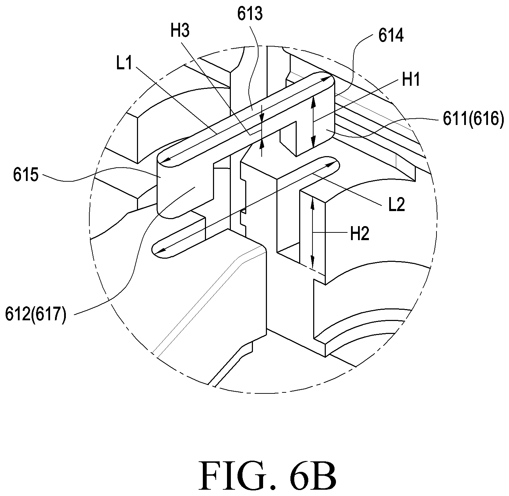

According to an embodiment of the disclosure, a first longitudinal end (e.g., the end 614 of FIG. 6B) of the conductive block 600 may be spaced apart from the inner surface 416 of the first recess 414. A second longitudinal end (e.g., the end 615 of FIG. 6B) of the conductive block 600 may be spaced apart from the inner surface 454 of the second recess 452.

FIG. 6B is an enlarged view illustrating a portion of FIG. 6A. Referring to FIGS. 6A and 6B, the conductive block 600 according to an embodiment of the disclosure may include a first inserted portion 611 inserted into the first recess 414. At least a portion of the first inserted portion 611 may be inserted into the first recess 414.

According to an embodiment of the disclosure, the first inserted portion 611 may include a first contact surface 616. The first contact surface 616 may be at least a portion of a lateral surface of the first inserted portion 611. The first contact surface 616 may contact at least a portion of the inner surface 416 of the first recess 414. The first contact surface 616 may extend along the length direction D1 of the conductive block 600.

According to an embodiment of the disclosure, the first inserted portion 611 may include a first end 614 located at an edge of the first inserted portion 611. The first end 614 may be spaced apart from the inner surface 416 of the first recess 414. A space between the first end 614 and the inner surface 416 of the first recess 414 may be empty or may receive a portion of the non-conductive member 500.

According to an embodiment of the disclosure, the conductive block 600 may include a second inserted portion 612 inserted into the second recess 452. At least a portion of the second inserted portion 612 may be inserted into the second recess 452.

According to an embodiment of the disclosure, the second inserted portion 612 may include a second contact surface 617. The second contact surface 617 may be at least a portion of a lateral surface of the second inserted portion 612. The second contact surface 617 may contact at least a portion of the inner surface 454 of the second recess 452. The second contact surface 617 may extend along the length direction D1 of the conductive block 600.

According to an embodiment of the disclosure, the second inserted portion 612 may include a second end 615 located at an edge of the second inserted portion 612. The second end 615 may be spaced apart from the inner surface 454 of the second recess 452. A space between the second end 615 and the inner surface 454 of the second recess 452 may be empty or may receive a portion of the non-conductive member 500.

According to an embodiment of the disclosure, the first end 614 of the conductive block 600 may be spaced apart from the inner surface 416 of the first recess 414, and the second end 615 of the conductive block 600 may be spaced apart from the inner surface 454 of the second recess 452.

According to an embodiment of the disclosure, the first end 614 and the second end 615 of the conductive block 600 may be spaced apart from each other in the length direction D1 of the conductive block 600. A distance L1 by which the first end 614 and the second end 615 are spaced apart from each other in the length direction D1 of the conductive block 600 may be smaller than a distance L2 by which the inner surface 416 of the first recess 414 and the inner surface 454 of the second recess 452 are spaced apart from each other in the length direction D1 of the conductive block 600.

Unlike the disclosure, due to assembly tolerance or the like occurring in a manufacturing process, there may be a case in which the first end 614 contacts the inner surface 416 of the first recess 414 and the second end 615 is spaced apart from the inner surface 454 of the second recess 452 (a third case), or a case in which the first end 614 is spaced apart from the inner surface 416 of the first recess 414 and the second end 615 contacts the inner surface 454 of the second recess 452 (a fourth case), and since a clearance space for a thermally extended portion is formed around the conductive block 600 in common, the third case and the fourth case are also included within the scope of the disclosure.

According to an embodiment of the disclosure, the conductive block 600 may include a connecting portion 613 connecting the first inserted portion 611 and the second inserted portion 612. The connecting portion 613 may extend between the first recess 414 and the second recess 452. As an example, the connecting portion 613 may extend straight between the first recess 414 and the second recess 452.

According to an embodiment of the disclosure, a height H1 of the contact surface 616, 617 of the inserted portion 611, 612 may be greater than a height H3 of the connecting portion 613. Accordingly, a contact area between the contact surface 616, 617 and the inner surface 416, 454 of the recess 414, 452 may be increased while minimizing a volume of the connecting portion 613.

According to an embodiment of the disclosure, the heights H3 of the contact surface 616, 617 and the connecting portion 613 may be a length defined in an insertion direction (e.g., a Z-axis direction) of the conductive block 600. Alternatively, the heights H3 of the contact surface 616, 617 and the connecting portion 613 may be a length defined in a direction in which the first recess 414 is recessed from the lateral surface 417 of the first bridge 413 or a direction in which the second recess 452 is recessed from the lateral surface 455 of the second bridge 451.

According to an embodiment of the disclosure, the height H1 of the first contact surface 616 of the first inserted portion 611 may be smaller than a depth H2 by which the first recess 414 is recessed from the lateral surface 417 of the first bridge 413. Similarly, according to an embodiment of the disclosure, the height of the second contact surface 617 of the second inserted portion 612 may be smaller than a depth by which the second recess 452 is recessed from the lateral surface 455 of the second bridge 451.

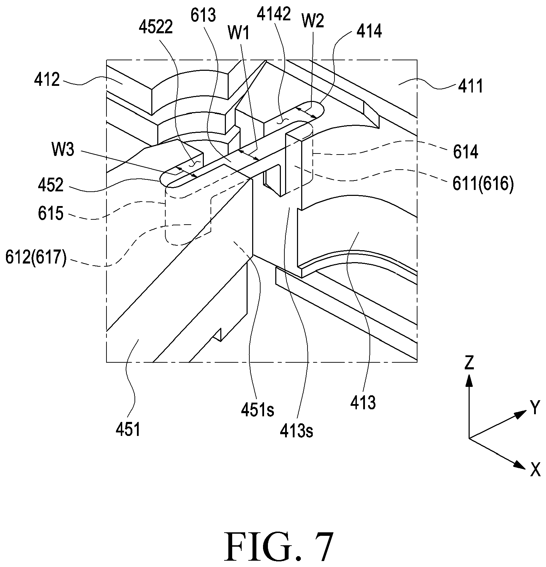

FIG. 7 is a view illustrating a state in which the conductive block 600 is received in the recesses 414, 452 with the non-conductive member 500 removed.

Referring to FIG. 7, a width of the first inserted portion 611 of the conductive block 600 according to an embodiment of the disclosure may be equal to or greater than a width W2 of the second opening 4142 of the first recess 414. The first inserted portion 611 may be tightly inserted into an inside of the first recess 414 through the second opening 4142 of the first recess 414. The first inserted portion 611 may contact the inner surface 416 of the first recess 414.

A width of the second inserted portion 612 of the conductive block 600 according to an embodiment of the disclosure may be equal to or greater than a width W3 of the second opening 4522 of the second recess 452. The second inserted portion 612 may be tightly inserted into an inside of the second recess 452 through the second opening 4522 of the second recess 452. The second inserted portion 612 may contact the inner surface 454 of the second recess 452.

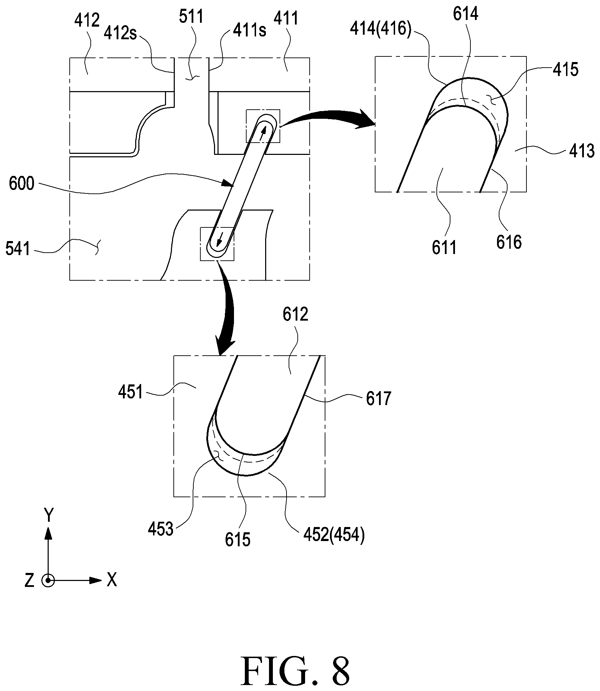

FIG. 8 is a view illustrating a state in which the conductive block 600 is received in the recesses 414, 452 with the non-conductive member 500 removed.

Referring to FIGS. 7 and 8, according to an embodiment of the disclosure, a first clearance space 415 may be formed between the first end 614 of the conductive block 600 and the inner surface 416 of the first recess 414. A second clearance space 453 may be formed between the second end 615 of the conductive block 600 and the inner surface 454 of the second recess 452.

According to an embodiment of the disclosure, a portion of the first portion 540 of the non-conductive member 500 may be received inside the first clearance space 415 and the second clearance space 453. The portion of the first portion 540 received in the first clearance space 415 and the second clearance space 453 may perform a cushioning action against an external force acting on the conductive portion 411 of the frame 410.

According to an embodiment of the disclosure, when the second bridge 451 is extended due to high temperature, the size of the second clearance space 453 may be decreased. When the conductive block 600 is exposed to high temperature, the second inserted portion 612 of the conductive block 600 may extend toward the second clearance space 453. Accordingly, when the second bridge 451 and the conductive block 600 are extended due to high temperature, the size of the second clearance space 453 is decreased, so that a change in a relative position of the conductive block 600 with respect to the second bridge 451 may be minimized.

According to an embodiment of the disclosure, when the first bridge 413 is extended due to high temperature, the size of the first clearance space 415 may be decreased. When the conductive block 600 is exposed to high temperature, the first inserted portion 611 of the conductive block 600 may extend toward the first clearance space 415. Accordingly, when the first bridge 413 and the conductive block 600 are extended due to high temperature, the size of the first clearance space 415 is decreased, so that a change in a relative position of the first bridge 413 with respect to the conductive block 600 may be minimized.

According to an embodiment of the disclosure, the conductive block 600 and the clearance space 415, 453 may be disposed in the length direction D1 of the conductive block 600. When the conductive block 600 is extended along the length direction D1 due to high temperature, the extended portion may be received in the clearance space 415, 453.

According to an embodiment of the disclosure, the longitudinal ends 614, 615 of the conductive block 600 and the inner surfaces 416, 454 of the recesses 414, 452 may have shapes corresponding to each other. The longitudinal ends 614, 615 of the conductive block 600 and the inner surfaces 416, 454 of the recesses 414, 452 may be conformally fitted to each other. As an example, if the longitudinal ends 614, 615 of the conductive block 600 are convex, the inner surfaces 416, 454 of the recesses 414, 452 may be concave to correspond thereto.

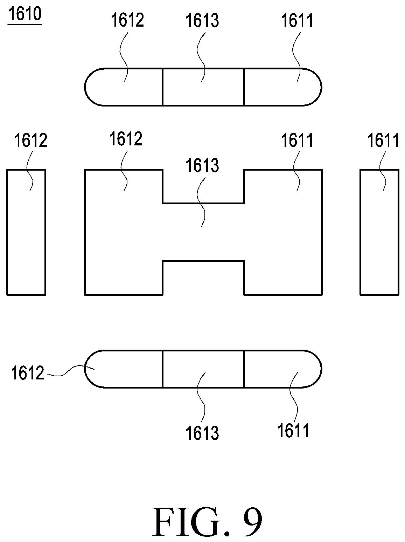

FIG. 9 illustrates views illustrating a conductive block 1610 from various directions according to an embodiment of the disclosure. Descriptions of the components (the conductive block 600, the first inserted portion 611, the second inserted portion 612, the connecting portion 613) described with reference to FIGS. 6A, 6B, and 7 may equally apply to the components with the same names (the conductive block 1610, the first inserted portion 1611, the second inserted portion 1612, the connecting portion 1613) illustrated in FIG. 9, to the extent that they are not inconsistent with each other.

According to an embodiment of the disclosure, the conductive block 1610 may include a first inserted portion 1611 inserted into the first recess (e.g., the first recess 414 of FIGS. 5 to 8). The conductive block 1610 may include a second inserted portion 1612 inserted into the second recess (e.g., the second recess 452 of FIGS. 5 to 8).

According to an embodiment of the disclosure, the conductive block 1610 may include a connecting portion 1613 connecting the first inserted portion 1611 and the second inserted portion 1612. The connecting portion 1613 may connect a central portion of the first inserted portion 1611 and a central portion of the second inserted portion 1612. The central portions of the first inserted portion 1611 and the second inserted portion 1612 may be predetermined portions including a center point of the first inserted portion 1611 and the second inserted portion 1612 and located on an inner side of an edge.

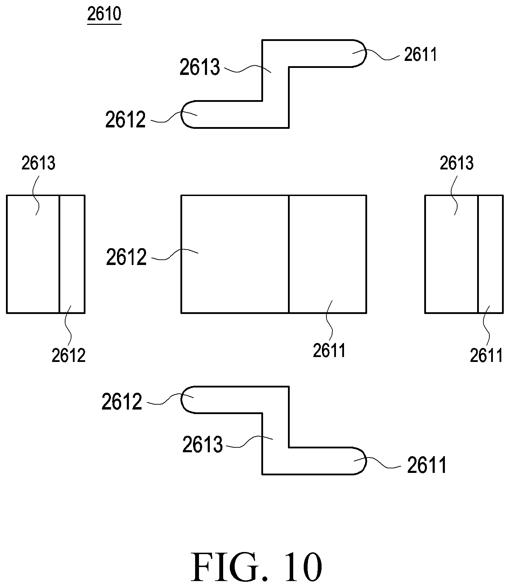

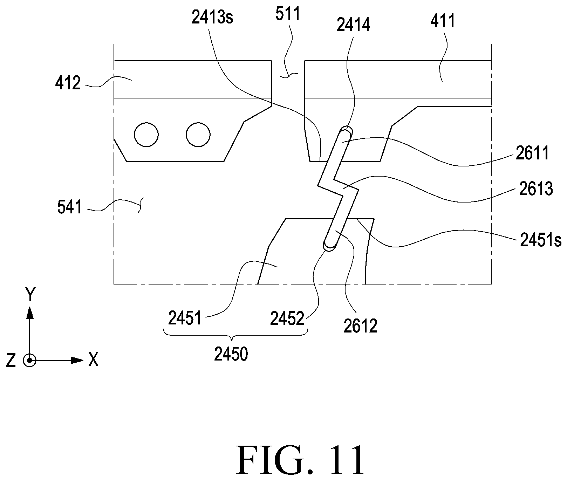

FIG. 10 illustrates views illustrating a conductive block 2610 from various directions according to an embodiment of the disclosure. FIG. 11 is a view illustrating a state in which a conductive block 2610 is received in a recess 2414, 2452 with the non-conductive member 500 removed according to an embodiment of the disclosure.

Descriptions of the components (the first bridge 413, the first recess 414, the opposing surface 413s, 451s, the supporting member 450, the second bridge 451, the second recess 452, the conductive block 600, the first inserted portion 611, the second inserted portion 612, the connecting portion 613) described with reference to FIGS. 6A, 6B, and 7 may equally apply to the components with the same names (the first bridge 2413, the first recess 2414, the opposing surface 2413s, 2451s, the supporting member 2450, the second bridge 2451, the second recess 2452, the conductive block 2610, the first inserted portion 2611, the second inserted portion 2612, the connecting portion 2613) illustrated in FIGS. 10 and 11, to the extent that they are not inconsistent with each other.

Referring to FIGS. 10 and 11, the conductive block 2610 according to an embodiment of the disclosure may include a first inserted portion 2611 inserted into the first recess 2414. An end (e.g., the first end 614 of FIG. 8) of the first inserted portion 2611 may be spaced apart from an inner surface of the first recess 2414. A lateral surface (e.g., the first contact surface 616 of FIG. 8) of the first inserted portion 2611 may contact an inner surface of the first recess 2414.

The conductive block 2610 according to an embodiment of the disclosure may include a second inserted portion 2612 inserted into the second recess 2452. An end (e.g., the second end 615 of FIG. 8) of the second inserted portion 2612 may be spaced apart from an inner surface of the second recess 2452. A lateral surface (e.g., the second contact surface 617 of FIG. 8) of the second inserted portion 2612 may contact an inner surface of the second recess 2452.

The conductive block 2610 according to an embodiment of the disclosure may include a connecting portion 2613 connecting the first inserted portion 2611 and the second inserted portion 2612. The connecting portion 2613 may be bent from the first inserted portion 2611. The connecting portion 2613 may be bent from the second inserted portion 2612.

According to an embodiment of the disclosure, the connecting portion 2613 may extend to intersect with the first inserted portion 2611. The connecting portion 2613 may extend to intersect with the second inserted portion 2612. The connecting portion 2613 may extend to intersect with a direction from the first recess 2414 toward the second recess 2452 or a direction from the second recess 2452 toward the first recess 2414.

According to an embodiment of the disclosure, the first recess 2414 and the second recess 2452 may be spaced apart from each other in a length direction of the connecting portion 2613. The direction in which the first recess 2414 is recessed from the opposing surface 2413s may intersect with the length direction of the connecting portion 2613. The direction in which the second recess 2452 is recessed from the opposing surface 2451s may intersect with the length direction of the connecting portion 2613.

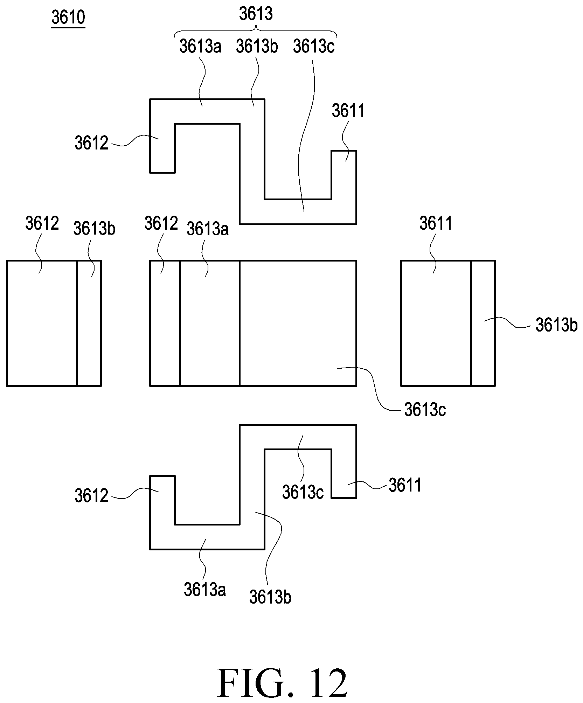

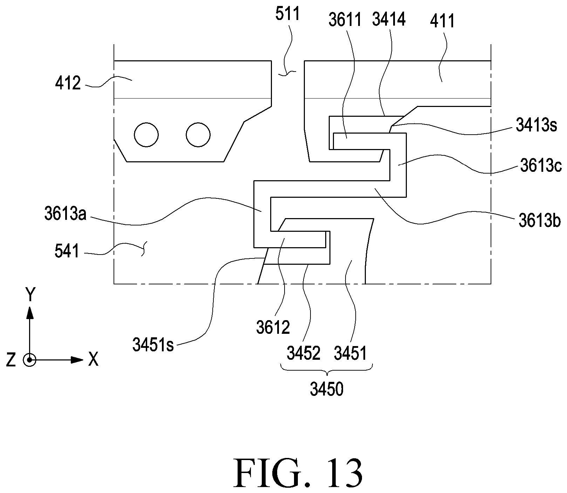

FIG. 12 illustrates views illustrating a conductive block 3610 from various directions according to an embodiment of the disclosure. FIG. 13 is a view illustrating a state in which a conductive block 3610 is received in a recess 3414, 3452 with the non-conductive member 500 removed according to an embodiment of the disclosure.

Descriptions of the components (the first bridge 413, the first recess 414, the opposing surface 413s, 451s, the supporting member 450, the second bridge 451, the second recess 452, the conductive block 600, the first inserted portion 611, the second inserted portion 612, the connecting portion 613) described with reference to FIGS. 6A, 6B, and 7 may equally apply to the components with the same names (the first bridge 3413, the first recess 3414, the supporting member 3450, the second bridge 3451, the second recess 3452, the conductive block 3610, the first inserted portion 3611, the second inserted portion 3612, the connecting portion 3613) illustrated in FIGS. 12 and 13, to the extent that they are not inconsistent with each other.

Referring to FIGS. 12 and 13, the conductive block 3610 according to an embodiment of the disclosure may include a first inserted portion 3611 inserted into the first recess 3414. The first inserted portion 3611 may be partially spaced apart from an inner surface of the first recess 3414. The first inserted portion 3611 may partially contact an inner surface of the first recess 3414.

The conductive block 3610 according to an embodiment of the disclosure may include a second inserted portion 3612 inserted into the second recess 3452. The second inserted portion 3612 may be partially spaced apart from an inner surface of the second recess 3452. The second inserted portion 3612 may partially contact an inner surface of the second recess 3452.

The conductive block 3610 according to an embodiment of the disclosure may include a connecting portion 3613 connecting the first inserted portion 3611 and the second inserted portion 3612. The connecting portion 3613 may have a structure bent a plurality of times (e.g., twice).

According to an embodiment of the disclosure, the connecting portion 3613 may include a first portion 3613b crossing between the first bridge 3413 and the second bridge 3415. The first portion 3613b of the connecting portion 3613 may be substantially parallel to the first inserted portion 3611. The first portion 3613b of the connecting portion 3613 may be substantially parallel to the second inserted portion 3612. The first inserted portion 3611 and the second inserted portion 3612 may be spaced apart from each other in a length direction of the first portion 3613b of the connecting portion 3613.

According to an embodiment of the disclosure, the connecting portion 3613 may include a second portion 3613c connecting one side of the first portion 3613b and the first inserted portion 3611. The second portion 3613c of the connecting portion 3613 may be bent from the one side of the first portion 3613b and extend. The first inserted portion 3611 may be bent from the second portion 3613c of the connecting portion 3613 and extend.

According to an embodiment of the disclosure, the connecting portion 3613 may include a third portion 3613a connecting the other side of the first portion 3613b and the second inserted portion 3612. The third portion 3613a of the connecting portion 3613 may be bent from the other side of the first portion 3613b and extend. The second inserted portion 3612 may be bent from the third portion 3613a of the connecting portion 3613 and extend.

According to an embodiment of the disclosure, the first recess 3414 may be formed in the first bridge 3413. The first recess 3414 may be recessed from a lateral surface 3413s of the first bridge 3413. According to an embodiment of the disclosure, the second recess 3452 may be formed in the second bridge 3451. The second recess 3452 may be recessed from a lateral surface 3451s of the second bridge 3451.

According to an embodiment of the disclosure, the direction in which the first recess 3414 is recessed from the lateral surface 3413s of the first bridge 3413 and the direction in which the second recess 3452 is recessed from the lateral surface 3451s of the second bridge 3451 may be substantially parallel. As an example, the direction in which the first recess 3414 is recessed from the lateral surface 3413s of the first bridge 3413 and the direction in which the second recess 3452 is recessed from the lateral surface 3451s of the second bridge 3451 may be opposite to each other.

According to an embodiment of the disclosure, the first inserted portion 3611 may be hooked in the first recess 3414. In a direction from the frame 410 toward the supporting member 3450, the first inserted portion 3611 may be hooked in the first recess 3414.

According to an embodiment of the disclosure, the second inserted portion 3612 may be hooked in the second recess 3452. In a direction from the supporting member 3450 toward the frame 410, the second inserted portion 3612 may be hooked in the second recess 3452.

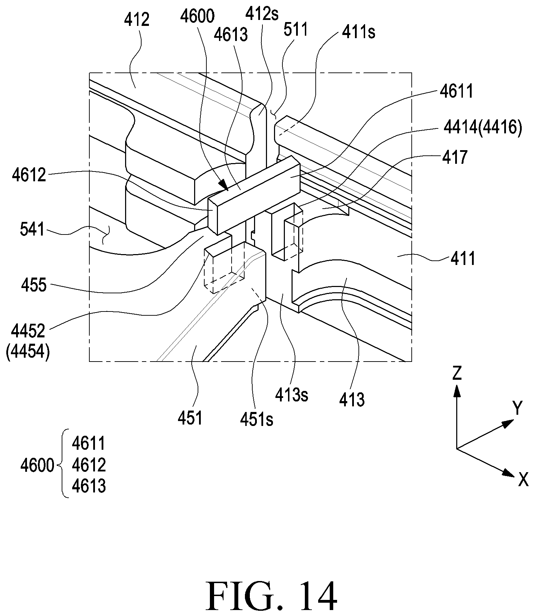

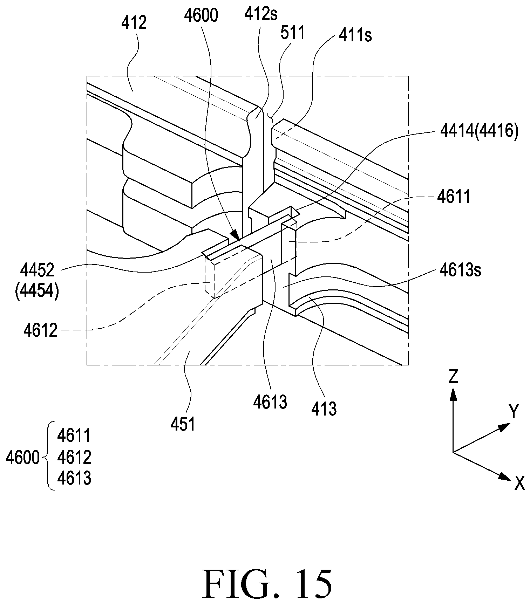

FIG. 14 is a view illustrating a state in which a conductive block 4600 is separated from a recess 4414, 4452 with the non-conductive member 500 removed according to an embodiment of the disclosure. FIG. 15 is a view illustrating a state in which a conductive block 4600 is received in a recess 4414, 4452 with the non-conductive member 500 removed according to an embodiment of the disclosure.

Descriptions of the components (the conductive block 600, the first inserted portion 611, the second inserted portion 612, the connecting portion 613, the first recess 414, the second recess 452, the inner surface 416 of the first recess 414, the inner surface 454 of the second recess 452) described with reference to FIGS. 6A, 6B, and 7 may equally apply to the components with the same names (the conductive block 4600, the first inserted portion 4611, the second inserted portion 4612, the connecting portion 4613, the first recess 4414, the second recess 4452, the inner surface 4416 of the first recess 4414, the inner surface 4454 of the second recess 4452) illustrated in FIGS. 14 and 15, to the extent that they are not inconsistent with each other.

Referring to FIGS. 14 and 15, according to an embodiment of the disclosure, the conductive block 4600 may include a first inserted portion 4611 inserted into the first recess 4414 and a second inserted portion 4612 inserted into the second recess 4452. The conductive block 4600 may include a connecting portion 4613 connecting the first inserted portion 4611 and the second inserted portion 4612. As an example, the conductive block 4600 may have an elongately extended bar shape.

According to an embodiment of the disclosure, the inner surface 4416 of the first recess 4414 may have a shape corresponding to an outer surface of the first inserted portion 4611. The inner surface 4416 of the first recess 4414 may extend along the outer surface of the first inserted portion 4611. As an example, the inner surface 4416 of the first recess 4414 may extend substantially parallel to the outer surface of the first inserted portion 4611.

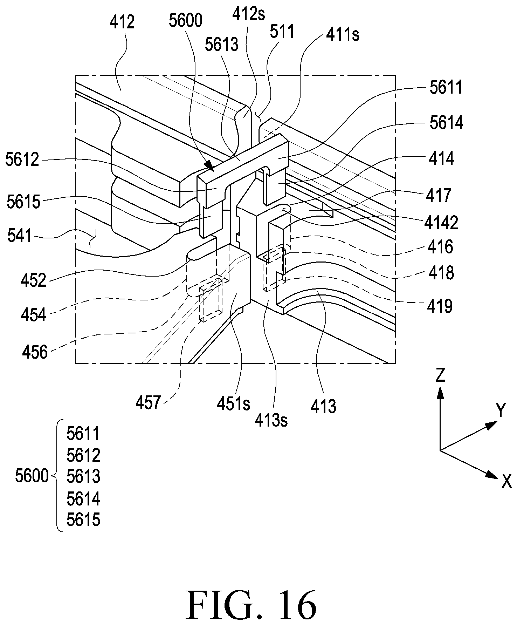

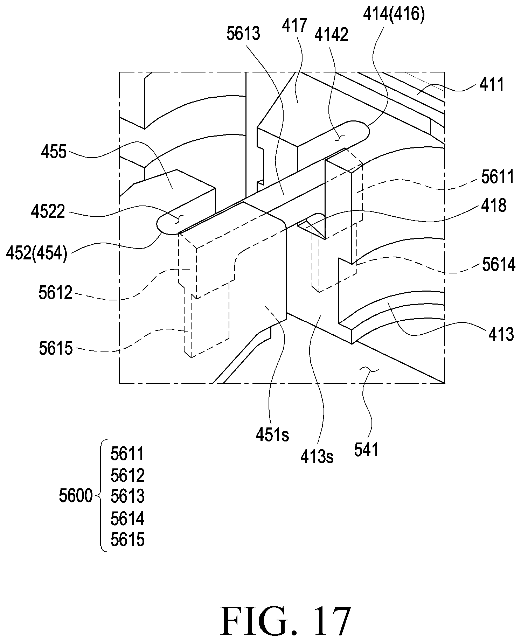

FIG. 16 is a view illustrating a state in which a conductive block 5600 is separated from a recess 414, 452 with the non-conductive member 500 removed according to an embodiment of the disclosure. FIG. 17 is a view illustrating a state in which a conductive block 5600 is received in a recess 414, 452 with the non-conductive member 500 removed according to an embodiment of the disclosure.

Descriptions of the components (the conductive block 600, the first inserted portion 611, the second inserted portion 612, the connecting portion 613) described with reference to FIGS. 6A, 6B, and 7 may equally apply to the components with the same names (the conductive block 5600, the first inserted portion 5611, the second inserted portion 5612, the connecting portion 5613) illustrated in FIGS. 16 and 17, to the extent that they are not inconsistent with each other.

Referring to FIGS. 16 and 17, according to an embodiment of the disclosure, the conductive block 5600 may include a first inserted portion 5611 inserted into the first recess 414 and a second inserted portion 5612 inserted into the second recess 452. The conductive block 5600 may include a connecting portion 5613 connecting the first inserted portion 5611 and the second inserted portion 5612.

According to an embodiment of the disclosure, the first recess 414 may include an inner surface 416 and an adjacent surface 418. The inner surface 416 and the adjacent surface 418 of the first recess 414 may face an outer surface of the first inserted portion 5611. A distance between the adjacent surface 418 and the outer surface of the first inserted portion 5611 may be smaller than a distance between the inner surface 416 and the outer surface of the first inserted portion 5611.

As an example, the adjacent surface 418 may contact the outer surface of the first inserted portion 5611 to support the first inserted portion 5611, and a clearance space (e.g., the first clearance space 415 of FIG. 8) may be formed between the inner surface 416 and the outer surface of the first inserted portion 5611. As another example, the adjacent surface 418 may be slightly (e.g., 0.01 mm) spaced apart from the first inserted portion 5611 due to assembly tolerance or machining tolerance.

According to an embodiment of the disclosure, the inner surface 416 of the first recess 414 may be spaced apart from the first inserted portion 5611 in a length direction (e.g., the length direction D1 of the conductive block 600 of FIG. 5) of the conductive block 5600. The adjacent surface 418 of the first recess 414 may be spaced apart from the first inserted portion 5611 in an insertion direction (e.g., a -Z direction) of the conductive block 5600.

According to an embodiment of the disclosure, a third recess 419 may be formed in the adjacent surface 418 of the first recess 414. The third recess 419 may be recessed from the adjacent surface 418 in the insertion direction (e.g., the -Z direction) of the conductive block 600. The third recess 419 may elongately extend along the length direction (e.g., the length direction D1 of the conductive block 600 of FIG. 5) of the conductive block 5600. The third recess 419 may have a shape conformally fitted to a first coupling portion 5614 of the conductive block 5600.

According to an embodiment of the disclosure, the second recess 452 may include an inner surface 454 and an adjacent surface 456. The inner surface 454 and the adjacent surface 456 of the second recess 452 may face an outer surface of the second inserted portion 5612. A distance between the adjacent surface 456 and the outer surface of the second inserted portion 5612 may be smaller than a distance between the inner surface 454 and the outer surface of the second inserted portion 5612.

As an example, the adjacent surface 456 may contact the outer surface of the second inserted portion 5612 to support the second inserted portion 5612, and a clearance space (e.g., the second clearance space 453 of FIG. 8) may be formed between the inner surface 454 and the outer surface of the second inserted portion 5612. As another example, the adjacent surface 456 may be slightly (e.g., 0.01 mm) spaced apart from the second inserted portion 5612 due to assembly tolerance or machining tolerance.

According to an embodiment of the disclosure, the inner surface 454 of the second recess 452 may be spaced apart from the second inserted portion 5612 in a length direction (e.g., the length direction D1 of the conductive block 600 of FIG. 5) of the conductive block 5600. The adjacent surface 456 of the second recess 452 may be spaced apart from the second inserted portion 5612 in an insertion direction (e.g., the -Z direction) of the conductive block 5600.

According to an embodiment of the disclosure, a fourth recess 457 may be formed in the adjacent surface 456 of the second recess 452. The fourth recess 457 may be recessed from the adjacent surface 456 in the insertion direction (e.g., the -Z direction) of the conductive block 600. The fourth recess 457 may elongately extend along the length direction (e.g., the length direction D1 of the conductive block 600 of FIG. 5) of the conductive block 5600. The fourth recess 457 may have a shape conformally fitted to a second coupling portion 5615 of the conductive block 5600.

According to an embodiment of the disclosure, the conductive block 5600 may include a first coupling portion 5614 protruding from the first inserted portion 5611 in one direction (e.g., the -Z direction). As an example, the first coupling portion 5614 may protrude from a lower surface of the first inserted portion 5611 which faces the adjacent surface 418 of the first recess 414. The first coupling portion 5614 may be inserted into the third recess 419. The first coupling portion 5614 may be press-fitted into the third recess 419.

According to an embodiment of the disclosure, at least a portion of an outer surface of the first coupling portion 5614 may tightly contact an inner surface of the third recess 419. As an example, in the length direction (e.g., the length direction D1 of the conductive block 600 of FIG. 5) of the conductive block 5600, the first coupling portion 5614 and the third recess 419 may be slightly (e.g., 0.01 mm) spaced apart due to machining tolerance. Accordingly, a portion of the first coupling portion 5614 extended due to heat may be received inside the third recess 419.

According to an embodiment of the disclosure, the first coupling portion 5614 may elongately extend along a length direction of the conductive block 5600. A width of the elongately extended first coupling portion 5614 may be smaller than a width of the first inserted portion 5611.

According to an embodiment of the disclosure, the conductive block 5600 may include a second coupling portion 5615 protruding from the second inserted portion 5612 in one direction (e.g., the -Z direction). As an example, the second coupling portion 5615 may protrude from a lower surface of the second inserted portion 5612 which faces the adjacent surface 456 of the second recess 452. The second coupling portion 5615 may be inserted into the fourth recess 457. The second coupling portion 5615 may be press-fitted into the fourth recess 457.

According to an embodiment of the disclosure, at least a portion of an outer surface of the second coupling portion 5615 may tightly contact an inner surface of the fourth recess 457. As an example, in the length direction (e.g., the length direction D1 of the conductive block 600 of FIG. 5) of the conductive block 5600, the second coupling portion 5615 and the fourth recess 457 may be slightly (e.g., 0.01 mm) spaced apart due to machining tolerance. Accordingly, a portion of the second coupling portion 5615 extended due to heat may be received inside the fourth recess 457.

According to an embodiment of the disclosure, the second coupling portion 5615 may elongately extend along a length direction of the conductive block 5600. A width of the elongately extended second coupling portion 5615 may be smaller than a width of the second inserted portion 5612.

An electronic device constituted by a plurality of components (e.g., an antenna) may be exposed to high temperature in a manufacturing process (e.g., drying). In this case, in a process of the plurality of components being exposed to high temperature or subsequently cooled, problems such as the arrangement of the plurality of components being distorted or the components being separated from each other may occur due to a constraint relationship between the plurality of components and/or a difference in thermal expansion coefficient of materials. Accordingly, research for enhancing the quality of the electronic device is being conducted.

A problem to be solved in the disclosure may be to minimize a relative displacement difference due to thermal expansion of two members coupled to each other.

A problem to be solved in the disclosure may be to enhance the quality of an electronic device by minimizing separation of two members coupled to each other due to thermal expansion.

The problem to be solved in the disclosure is not limited to the above-mentioned problems, and may be variously determined within a scope not departing from the concept and scope of the disclosure.

An electronic device according to various embodiments of the disclosure may minimize a relative displacement difference occurring when two members coupled to each other are extended due to heat by forming a clearance space for receiving a portion extended due to heat.

An electronic device according to various embodiments of the disclosure may minimize separation of two members coupled to each other due to thermal expansion by disposing a configuration that is extended in a direction inclined with respect to an extension direction of a coupling surface of the two members coupled to each other and a clearance space in which the extended portion is received.

An electronic device according to various embodiments of the disclosure may minimize separation between two members coupled to each other by designing such that a direction in which a degree of expansion of the two members coupled to each other is large intersects.

Effects obtainable in the disclosure are not limited to the effects mentioned above, and other effects not mentioned is clearly understood by those of ordinary skill in the art to which the disclosure belongs from the description below.

An electronic device according to an embodiment of the disclosure may include a frame 410 including two conductive portions 411, 412 which are spaced apart from each other.

An electronic device according to an embodiment of the disclosure may include a non-conductive member 500 including a protruding portion 510 inserted between the two conductive portions 411, 412.

The electronic device 101 according to an embodiment of the disclosure may include a supporting member 450; 2450 spaced inward from the frame 410.

The electronic device 101 according to an embodiment of the disclosure may include a conductive block 600; 2600 disposed between the supporting member 450 and the frame 410.

The conductive block 600; 2600 according to an embodiment of the disclosure may extend from the supporting member 450 toward the frame 410.

The electronic device 101 according to an embodiment of the disclosure may include a first recess 414; 2414 formed on an inner surface 413s; 2413s of a first conductive portion 411 of the two conductive portions 411, 412 which faces the supporting member 450, wherein the conductive block 600; 2600 is inserted into the first recess 414; 2414.

The electronic device 101 according to an embodiment of the disclosure may include a second recess 452; 2452 formed on one surface 451s; 2451s of the supporting member 450 which faces the first conductive portion 411, wherein the conductive block 600; 2600 is inserted into the second recess 452; 2452.

According to an embodiment of the disclosure, the conductive block 600 may extend from the first recess 414 to the second recess 452.

According to an embodiment of the disclosure, at least one of two longitudinal ends 614, 615 of the conductive block 600 may be spaced apart from the inner surface 416, 454 of the first recess 414 and the second recess 452.

According to an embodiment of the disclosure, the lateral surface 616, 617 of the conductive block 600 may contact an inner surface of the first recess 414 and an inner surface of the second recess 454.

According to an embodiment of the disclosure, the supporting member 450 may be conductive.

According to an embodiment of the disclosure, the conductive block 600; 2600 may include a first inserted portion 611; 2611 inserted into the first recess 414; 2414.

According to an embodiment of the disclosure, the conductive block 600; 2600 may include a second inserted portion 612; 2612 inserted into the second recess 454; 2454.

According to an embodiment of the disclosure, the conductive block 600; 2600 may include a connecting portion 613; 2613 located outside of the first recess 414; 2414 and the second recess 454; 2454.

According to an embodiment of the disclosure, the connecting portion 613; 2613 may connect the first inserted portion 611; 2611 and the second inserted portion 612; 2612.

According to an embodiment of the disclosure, the first recess 414 may have a shape corresponding to the first inserted portion 611.

According to an embodiment of the disclosure, the second recess 454 may have a shape corresponding to the second inserted portion 612.

According to an embodiment of the disclosure, a width of the connecting portion 613 may be smaller than a width of the lateral surface 616 of the first inserted portion 611 which contacts an inner surface of the first recess 414.

According to an embodiment of the disclosure, a width of the connecting portion 613 may be smaller than a width of the lateral surface 617 of the second inserted portion 612 which contacts an inner surface of the second recess 452.

According to an embodiment of the disclosure, the connecting portion 613 may extend along a direction in which the first recess 414 is recessed from the inner surface 413s of the first conductive portion 411.

According to an embodiment of the disclosure, the connecting portion 613 may extend along a direction in which the second recess 452 is recessed from the one surface 451s of the supporting member 450.

According to an embodiment of the disclosure, the connecting portion 2613 may extend to intersect with a direction in which the first recess 2414 is recessed from the inner surface 2413s of the first conductive portion 411.

According to an embodiment of the disclosure, the connecting portion 2613 may extend to intersect with a direction in which the second recess 2452 is recessed from the one surface 2451s of the supporting member 2450.

According to an embodiment of the disclosure, the first recess 414 and the second recess 452 may face each other.

According to an embodiment of the disclosure, the frame 410 may include a first bridge 413 protruding toward the supporting member 450.

According to an embodiment of the disclosure, the first bridge 413 may include the first recess 414.

According to an embodiment of the disclosure, the supporting member 450 may include a second bridge 451 protruding toward the frame 410.

According to an embodiment of the disclosure, the second bridge 451 may be spaced apart from the first bridge 413.

According to an embodiment of the disclosure, the second bridge 451 may have the second recess 452 formed therein.

According to an embodiment of the disclosure, a side 4142 of the first recess 414 may be open such that the conductive block 600 is partially exposed.

According to an embodiment of the disclosure, a side 4522 of the second recess 452 may be open such that the conductive block 600 is partially exposed.

According to an embodiment of the disclosure, a direction in which the first recess 414 is recessed from the inner surface 413s and a direction in which the second recess 452 is recessed from the one surface 451s of the supporting member 450 may be parallel to each other.

According to an embodiment of the disclosure, a direction in which the first recess 2414 is recessed from the inner surface 2413s may intersect with a direction from the first recess 2414 toward the second recess 2452.

According to an embodiment of the disclosure, a direction in which the second recess 2451 is recessed from the one surface 2451s of the supporting member 2450 may intersect with a direction from the first recess 2414 toward the second recess 2452.

According to an embodiment of the disclosure, the protruding portion 510 of the non-conductive member 500 may be disposed between two opposing surfaces 411s, 412s of the two conductive portions 411, 412 which face each other.

According to an embodiment of the disclosure, the length direction D1 of the conductive block 600 may be inclined with respect to the opposing surface 411s of the first conductive portion 411 which includes the first recess 414.

According to an embodiment of the disclosure, the length direction D1 of the conductive block 600 may be inclined so as to be away from the opposing surface 411s of the first conductive portion 411 which includes the first recess 414.

The electronic device 101 according to an embodiment of the disclosure may include a conductive block 600 protruding from one of the supporting member 450 and the conductive portion 411 and extending toward the other.

The electronic device 101 according to an embodiment of the disclosure may include a recess 414, 452 formed in the other of the supporting member 450 and the conductive portion 411, wherein the conductive block 600 is inserted into the recess 414, 452.

The drawings referenced above include X, Y, and Z coordinate axes having the same orientations. The coordinate axes included in each drawing are for convenience of description, and the directions of each axis (X-axis, Y-axis, and Z-axis) do not have directionality such as forward/backward direction, up-down direction, and left-right direction, and the directions of each axis may be understood as +X, +Y, and +Y directions, and directions opposite thereto may be understood as -X, -Y, and -Z directions.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. An electronic device, comprising:
a frame (410) including two conductive portions (411, 412) which are spaced apart from each other;
a non-conductive member (500) comprising a protruding portion (510) which is inserted between the two conductive portions (411, 412);
a supporting member (450; 2450) spaced inward from the frame (410);
a conductive block (600; 2600) disposed between the supporting member (450; 2450) and the frame (410), the conductive block (600; 2600) extending from the supporting member (450; 2450) toward the frame (410);
a first recess (414; 2414) formed on an inner surface (413s; 2413s) of a first conductive portion (411) of the two conductive portions (411, 412) which faces the supporting member (450; 2450), wherein the conductive block (600; 2600) is inserted into the first recess (414; 2414); and
a second recess (452; 2452) formed on one surface (451s; 2451s) of the supporting member (450; 2450) which faces the first conductive portion (411), wherein the conductive block (600; 2600) is inserted into the second recess (452; 2452).

2. The electronic device of claim 1, wherein:
the conductive block (600) extends from the first recess (414) to the second recess (452),
at least one of two longitudinal ends (614, 615) is spaced apart from an inner surface (416, 454) of the first recess (414) and the second recess (452).

3. The electronic device of claim 1 or 2, wherein:
a lateral surface (616, 617) of the conductive block (600) contacts an inner surface of the first recess (414) and an inner surface of the second recess (454), and
the supporting member (450) is conductive.

4. The electronic device of any one of claims 1 to 3,
wherein the conductive block (600; 2600) comprises:
a first inserted portion (611; 2611) inserted into the first recess (414; 2414);
a second inserted portion (612; 2612) inserted into the second recess (454; 2454); and
a connecting portion (613; 2613) located outside of the first recess (414; 2414) and the second recess (454; 2454), the connecting portion (613; 2613) connecting the first inserted portion (611; 2611) and the second inserted portion (612; 2612).

5. The electronic device of any one of claims 1 to 4, wherein:
the first recess (414) has a shape corresponding to a shape of the first inserted portion (611), and
the second recess (454) has a shape corresponding to a shape of the second inserted portion (612).

6. The electronic device of any one of claims 1 to 5,
wherein a width of the connecting portion (613) is smaller than a width of the lateral surface (616) of the first inserted portion (611) which contacts the inner surface of the first recess (414) and a width of the lateral surface (617) of the second inserted portion (612) which contacts the inner surface of the second recess (452).

7. The electronic device of any one of claims 1 to 6,
wherein the connecting portion (613) extends along a direction in which the first recess (414) is recessed from the inner surface (413s) of the first conductive portion (411) or a direction in which the second recess (452) is recessed from the one surface (451s) of the supporting member (450).

8. The electronic device of any one of claims 1 to 7,
wherein the connecting portion (2613) extends to intersect with a direction in which the first recess (2414) is recessed from the inner surface (2413s) of the first conductive portion (411) and a direction in which the second recess (2452) is recessed from the one surface (2451s) of the supporting member (2450).

9. The electronic device of any one of claims 1 to 8,
wherein the first recess (414) and the second recess (452) face each other.

10. The electronic device of any one of claims 1 to 9,
wherein the frame (410) comprises a first bridge (413) protruding toward the supporting member (450), the first recess (414) being formed in the first bridge (413), and
wherein the supporting member (450) comprises a second bridge (451) protruding toward the frame (410), spaced apart from the first bridge (413), the second recess (452) being formed in the second bridge (451).

11. The electronic device of any one of claims 1 to 10,
wherein a side (4142) of the first recess (414) is open such that the conductive block (600) is partially exposed,
wherein a side (4522) of the second recess (452) is open such that the conductive block (600) is partially exposed.

12. The electronic device of any one of claims 1 to 11,
wherein a direction in which the first recess (414) is recessed from the inner surface (413s) is parallel to a direction in which the second recess (452) is recessed from the one surface (451s) of the supporting member (450).

13. The electronic device of any one of claims 1 to 12,
wherein a direction in which the first recess (2414) is recessed from the inner surface (2413s) or a direction in which the second recess (2451) is recessed from the one surface (2451s) of the supporting member (2450) intersects with a direction from the first recess (2414) toward the second recess (2452).

14. The electronic device of any one of claims 1 to 13, wherein:
the protruding portion (510) of the non-conductive member (500) is disposed between two opposing surfaces (411s, 412s) of the two conductive portions (411, 412) which face each other, and
a longitudinal direction (D1) of the conductive block (600) is inclined with respect to the opposing surface (411s) of the first conductive portion (411) which includes the first recess (414).

15. The electronic device of any one of claims 1 to 14,
wherein the longitudinal direction (D1) of the conductive block (600) is inclined so as to be away from the opposing surface (411s) of the first conductive portion (411) that includes the first recess (414).
